Europäisches Patentamt

European Patent Office

Office européen des brevets

(19)

(11) **EP 0 823 821 A2**

## (12) EUROPEAN PATENT APPLICATION

(43) Date of publication:
**11.02.1998 Bulletin 1998/07**

(51) Int Cl.⁶: **H04N 7/18**, G07C 9/00

(21) Application number: **97305096.6**

(22) Date of filing: **10.07.1997**

(84) Designated Contracting States:
**AT BE CH DE DK ES FI FR GB GR IE IT LI LU MC NL PT SE**

(30) Priority: **08.08.1996 US 694365**

(71) Applicant: **NCR International, Inc.
Dayton, Ohio 45479 (US)**

(72) Inventors:
- **Ming, John Charles
  Acworth, Georgia 30102 (US)**
- **Crabtree, Ralph Newton
  Atlanta, Georgia 30345 (US)**

- **Hyche, Martin E.
  Norcross, Georgia 30093 (US)**
- **Khosravi, Mehdi
  Roswell, Georgia 30075 (US)**
- **Sastry, Chellury R.
  Plainsboro, New Jersey 08536 (US)**

(74) Representative: **Irish, Vivien Elizabeth
  International IP Department,
  NCR Limited,
  206 Marylebone Road
  London NW1 6LY (GB)**

(54) **System for analyzing movement patterns**

(57) A system and method are provided for detecting human movement patterns in and around a selected area using imaging techniques. A video camera 110 is positioned so as to view the area of interest (410), such as a promotional display, an automated teller machine (ATM), etc. The output (115) of the video camera is fed in real-time into a frame grabber (120), where the video image is repeatedly and sequentially digitized and stored in the memory (135) of a processing system (140). One or more passing zones and looking zones are defined for the video image. A passing zone (430) is defined as a zone of the video image through which a person would be located if "passing by" the area of interest a looking zone (420) is defined as a zone of the video image where a person would be located if "looking" at the area of interest and is often smaller in area than the passing zone; the processing system generates passing and/or looking events. Data corresponding to the passing, and looking events may be stored for further processing and/or analysis.

**FIG. 3**

## Description

The present invention generally relates to a system and method for detecting and analyzing movement patterns of humans in and around selected areas using imaging techniques. In particular, the present invention relates to a system and method for detecting and analyzing and quantifying movement activities, such as passing and looking and dwell time, of customers in and around product displays, customer service areas, automated teller machines, interactive kiosks, and other bounded areas in which customers or other people may be present.

It has become commonplace for retailers, manufacturers, and other organizations to rely on localized promotional displays in order to promote the sale of their products. For example, a supermarket may place a free-standing or wall-mounted promotional display on the end of an aisle, or in some other suitable location, in order to promote the sale of a product, such as a soft drink. Promotional displays are generally designed to draw attention from passing customers, so that the customers will hopefully stop, look at the display, and decide to purchase the product or service advertised thereon. Such promotional displays, when working properly, can therefore aid in the marketing of the underlying product or service.

While serving a somewhat different purpose than promotional displays, it has also become commonplace for banks and other institutions to utilize localized automated teller machines (ATMs) and interactive computer kiosks to allow customers to perform on-line transactions. ATMs and kiosks are similar to promotional displays in that they are often designed to attract passing customers. Because some ATMs charge customers a usage fee, the ability to promote usage can lead to increased revenue to the banks.

Unfortunately, it is usually difficult to precisely determine how effective a promotional display, ATM, etc. is in attracting customers. For the promotional display, a retailer may compare the revenue associated with a product before and after the installation of the promotional display, but this may not be an accurate indication of the effectiveness of the display. For example, many factors can contribute to the level of sales of a product, only one of which is a promotional display. For an ATM, it is possible for a bank to determine the total number of users of the ATM, and the type of transactions performed, but it is usually difficult to determine the percentage of passing people who stop to use the machine. Whether its a promotional display, an ATM, etc., the ability to determine how many people stop versus how many don't stop can be quite valuable information.

The ability to detect and analyze "passing" and "looking" habits of people can prove to be useful not just to commercial organizations such as retailers, manufacturers and banks, but also in any other situation involving a localized area of interest. For example, a rapid transit authority might be interested whether people are stopping to look at a bus schedule posted on the wall of the station. Changes to the way the schedule is organized and presented can be made based upon the passing and looking habits of people passing by.

It is the object of the invention to provide a system and method for detecting and analyzing movement patterns, such as passing, looking and dwell time, of people in and around a selected area.

According to the invention a process for analyzing movement patterns in a localized area, characterizing the steps of:

positioning a video camera so as to view the localized area;
capturing sequential images from the video camera at selected intervals in time;
storing the sequential images in a memory;
detecting whether a person exists within the stored sequential images;
sensing the time that any detected person exists in the stored images; and
generating an event once the sensed time reaches a predetermined threshold.

A system and method are provided for detecting human movement patterns in and around a selected area using imaging techniques. A video camera may be positioned so as to view the area of interest, such as a promotional display, an automated teller machine (ATM), etc. The output of the video camera is fed in real-time into a frame grabber, where the video image is repeatedly and sequentially digitized and stored in the memory of a processing system. One or more passing zones and looking zones are defined for the video image. A passing zone is defined as a zone of the video image through which a person would be located if "passing" by the selected zone (such as by a promotional display, ATM, etc.). A looking zone if defined as a zone of the video image where a person would be located if "looking" at the selected zone. As people pass by the selected zone and/or look in the selected zone, the processing system generates passing and/or looking events. While people remain within the looking zone, the processing system may also monitor the system clock in order to measure how long a person looks at the product, ATM, etc. Dwell time, which measures how long each person spends, is another important result produced by this system. Data corresponding to the passing, looking and dwell time events may be stored for further processing and/or analysis.

The invention will now be described by way of example with reference to the accompanying drawings in which:-
FIG. 1 is a block diagram of the present invention in one embodiment.

FIG. 2 is a flow diagram depicting the overall steps that are performed by the present invention.

FIG. 3 is hierarchical tree that depicts a data structure that may be used in accordance with the present invention.

FIGS. 4A and 4B are simplified versions of a camera view that may be processed by the present invention.

FIG. 5 is a flow diagram depicting the overall steps that may be performed by the present invention to implement looking zone processing.

FIG. 6 is a flow diagram depicting the overall steps that may be performed by the present invention to implement passing zone processing.

FIG. 7 is a flow diagram depicting the overall steps that may be performed by the present invention to implement object filtering.

FIG. 8 is a flow diagram depicting the overall steps that may be performed by the present invention to determine if an object has passed through a passing zone.

FIG. 9 is a flow diagram depicting the overall steps that may be performed by the present invention to implement background updating.

FIG. 10 is a flow diagram depicting the steps that may be performed by the present invention to implement object matching.

The system of the present invention operates to process a sequence of input images received from a camera monitoring a promotional display, an ATM, or other area of interest in order to collect data that is useful in analyzing customer interaction with the display, etc.. This analysis may provide the following type of information:

- number of people (for example, customers) that pass the display, etc.
- number of people that stop and look at the display, etc.
- length of time each person looked at the display, etc.

For each camera view, "passing zones" and "looking zones" are defined by the user. Passing zones are used to determine the number of people that walk past the promotional display and looking zones are used to determine the number of people that look at the display.

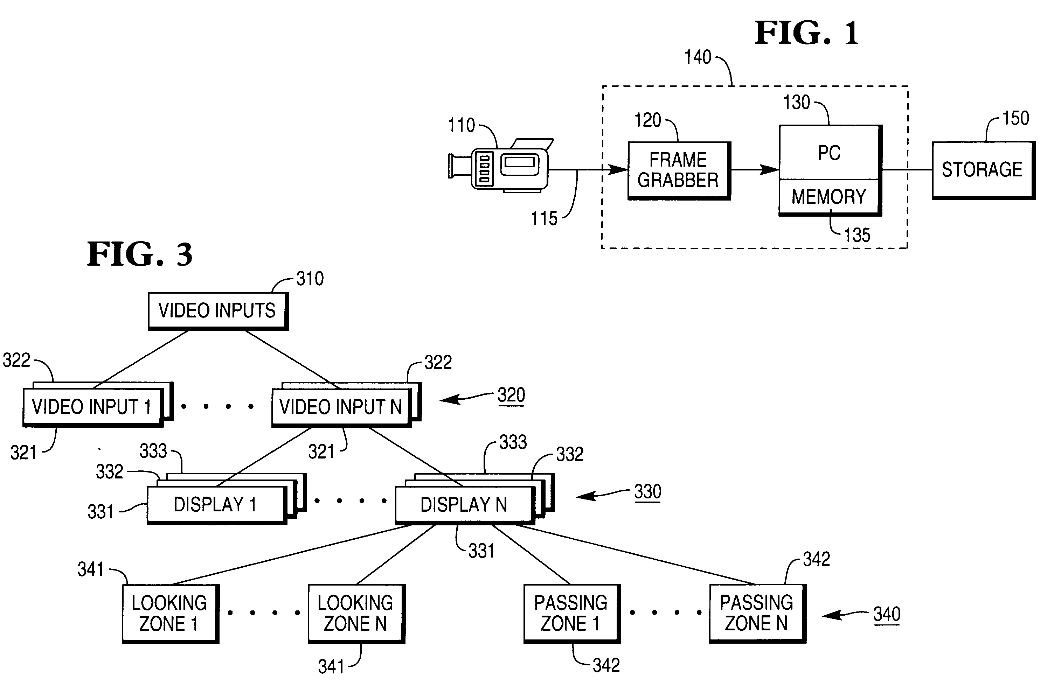

FIG. 1 depicts the overall structure of the present invention in one embodiment. The hardware components of the present invention may consist of standard off-the-shelf components. The primary components in the system are one or more video cameras 110, one or more frame grabbers 120, and a processing system 130, such as a personal computer (PC). The combination of the PC 130 and frame grabber 120 may collectively be referred to as a "video processor" 140. The video processor 140 receives a standard video signal format 115, such as RS-170, NTSC, CCIR, PAL, from one or more of the cameras 110, which can be monochrome or color. The camera(s) is/are positioned to view a selected area of interest, such as a promotional display in a retail establishment, an automated teller machine (ATM), or any other localized area where people (or even other objects) pass by, and optionally stop in order to look.

The video signal 115 is input to the frame grabber 120. In one embodiment, the frame grabber 120 may comprise a Meteor Color Frame Grabber, available from Matrox. The frame grabber 120 operates to convert the analog video signal 115 into a digital image stored within the memory 135, which can be processed by the video processor 140. For example, in one implementation, the frame grabber 120 may convert the video signal 115 into a 640 x 480 (NTSC) or 768 x 576 (PAL) gray level image. Each pixel may have 8 bits of resolution. -- 8 bits of resolution is usually sufficient, and color data could be used to increase system performance. Of course, a variety of other digital image formats and resolutions may be used as well, as will be recognized by one of ordinary skill.

At this time, analysis of the image begins by the PC 130, as will be described in further detail below.

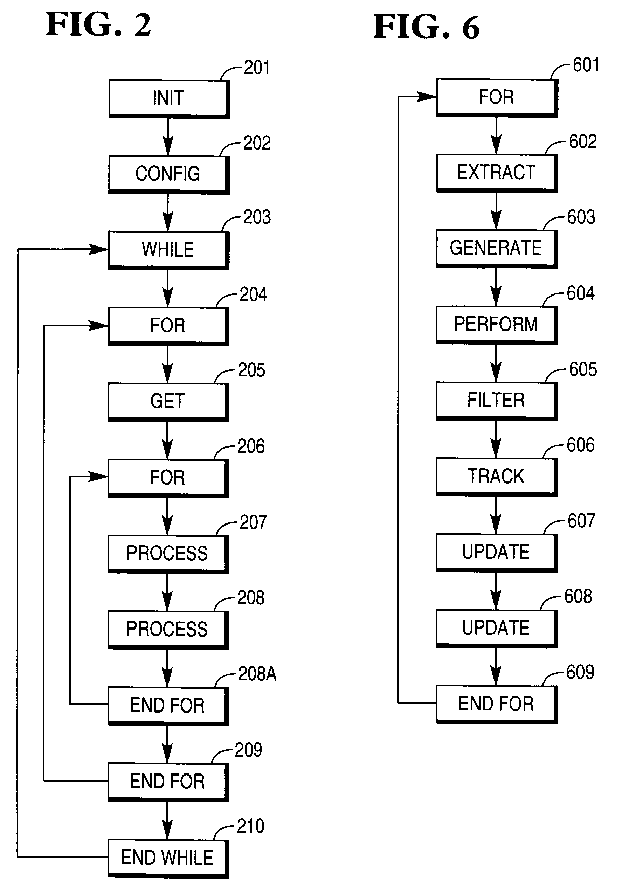

The high level control flow of the present invention, performed by the processing system 130, is described below, both in pseudo-code and in a more detailed format. Reference is made in [brackets] in the pseudo-code to the steps illustrated in FIG. 2:

```
[201] initialize system parameters
[202] configure video streams
[203] while ( true )
    [204] for (j = 0; j < total number of video inputs; j++ )
        [205] get next frame from video input j
        [206] for ( i=0; i < total number of displays; i++ )
            [207] process looking zones for display i
            [208] process passing zones for display i
        [208a] end for
    [209] end for
[210] end while
```

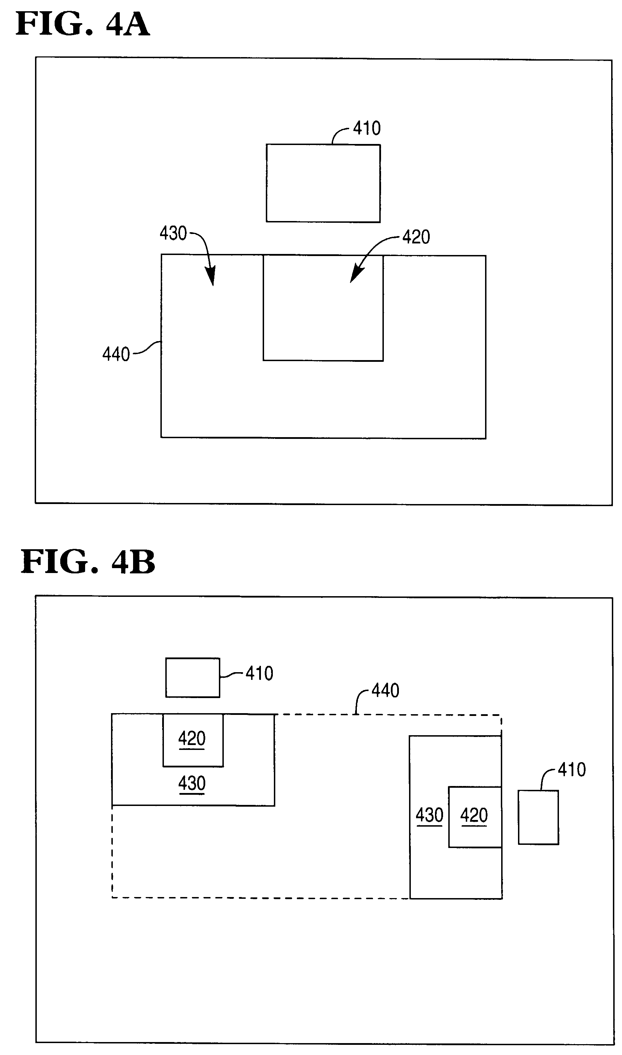

In step 201, the system parameters are initialized. System parameters can be viewed as a tree structure, as shown in FIG. 3. The root 310 ofthe tree is "video inputs", which is the highest level data structure representing the video signal(s) 115. The next level 320 of the tree contains one or more nodes 321, each corresponding to one of the video signals 115 -- for each video signal 115, there is one node 321. Each node 321 includes as a parameter a frame grabber identifier 322, which identifies the frame grabber 120 assigned to the corresponding video signal 115.

For each video signal 115, the present invention may be implemented to support the analysis of one or more areas of interest within the view of the camera 110. For example, the camera 110 may be aimed at two promotional displays within a retail establishment, wherein each of the two displays contains different products. Thus, there may be two areas of interest within the video image of each video signal 115. This is represented within the system parameter tree structure of FIG. 3 as yet another level 330, containing one or more nodes 331. Each node 331 is a child of one of the nodes 321 of level 320, and each node 331 corresponds to one area of interest (e.g., one promotional display, one ATM, etc.). Associated with each node 331 may be a display identifier 332 which uniquely identifies the particular display, as well as a "looking time" parameter 333 which identifies the minimum amount of time that must pass for a looking event to be logged (described below).

FIG.4A is a depiction of a video display capturing an image from the video camera 110, stored in memory 135, of a promotional display 410, with the looking zone 420 and passing zone 430 defined. Likewise, FIG. 4B is a depiction of a video display where there are two displays 410, two looking zones 420 and two passing zones 430. Within each camera view, multiple passing zones 430 can be defined.

A rectangular passing zone 430 is specified. As people move through the passing zone 430, the system generates events, "passing events", that indicate that a person has passed through the passing zone 430.

In order to determine the number of people that actually look at a promotional display, etc. 410, it is necessary to determine when a person enters the looking zone 420 and capture the amount of time the person remains in the looking zone 420. If a person remains in the looking zone 420 a minimum amount of time, a looking event is generated.

A looking zone 420 is processed differently to a passing zone 430.

The output of the system of the present invention is a set of events that represent persons passing the display 410 and persons looking at the display 410. There is a one-to-one correspondence between an event and a person passing through the passing zone 430. Each time a person remains in the looking zone 420 longer than a predetermined time period, a looking event is generated. TABLE 5 (see below) illustrates an exemplary format of a passing event, while TABLE 4 illustrates an exemplary format of a looking event.

A passing event may require approximately 12 bytes of data storage, whereas a looking event may require approximately 16 bytes.

TABLE 1 contains the data storage requirements for a typical configuration monitoring one promotional display 410. It is assumed that twenty percent of passing people actually stop and look at the display 410:

TABLE 1

| Total Passing Customers | Total Looking Customers | Bytes/Passing Event | Bytes/Looking Event | Storage Requirements |
|---|---|---|---|---|
| 500 | 100 | 12 | 16 | 7.6K |
| 1000 | 200 | 12 | 16 | 15.2K |
| 3000 | 600 | 12 | 16 | 45.6K |

Referring again to FIG.3, associated with each node 331 (which correspond to a display, ATM, etc.) is yet another level 340 of the tree structure. Level 340 contains one or more looking zone nodes 341 and passing zone nodes 342, each pair of which may be associated with one node 331. Thus, each looking zone 420 and passing zone 430 defined for an individual display 331 may use the same display identifier 332.

The following parameters may exist for each looking zone node 341:

Bounding Box:      The bounding box describes the location of the looking zone 420 within the camera 110 view. The location information contains the x,y coordinates of the top left corner of the looking zone 420 and lower right corner of the looking zone 420 in the image coordinate system, as illustrated in FIG. 4.

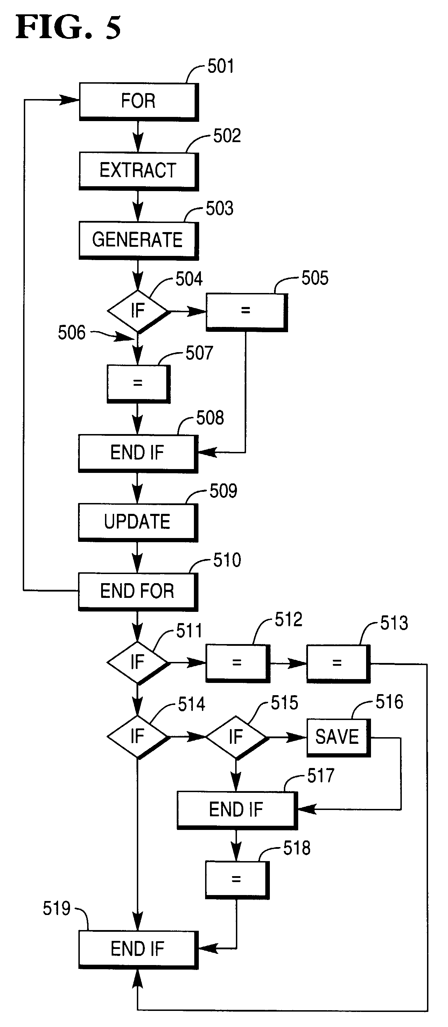

Percent Occupied:      The percent occupied parameter specifies the number of pixels that must be "On" for the looking zone 420 to be considered occupied. This is described in further detail below with respect to FIG. 5.

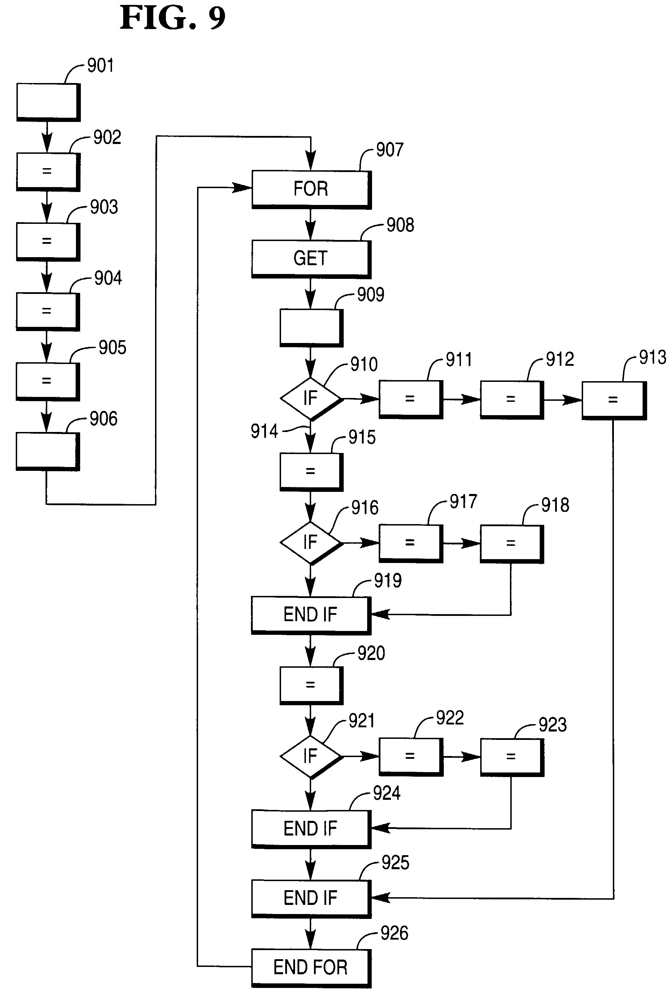

Difference Threshold:      Specifies the difference threshold used when performing the image difference operation. This is also described in further detail below with respect to FIGS. 5 and 9.

The following parameters may also exist for each looking zone node 341. Each of these parameters are also described in further detail below with respect to FIG. 9.

Previous Threshold:
Count Threshold:
Percent Difference Threshold:
Background Image:

The following parameters exist for each passing zone node 342.

| | |
|---|---|
| Bounding Box: | The bounding box describes the location of the passing zone 430 within the camera 110 view. The location information contains the x,y coordinates of the top left corner of the passing zone 430 and lower right corner of the passing zone 430 in the image coordinate system. See FIG. 4. |
| Difference Threshold: | Specifies the difference threshold used when performing the image difference operation. This is described in further detail below with respect to FIGS. 6 and 9. |
| Adjacency Distance: | Specifies the adjacency constraint for region labelling. This is described elsewhere with respect to FIG. 6. |
| Minimum Object Size: | Specifies the minimum object size, in pixels, used in the filtering operation. This is described elsewhere with respect to FIG. 7. |
| Maximum Distance: | Specifies the maximum distance, in pixels, that two objects are allowed when matching. This is described elsewhere with respect to FIG. 10. |
| Path Length Threshold: | Specifies the minimum length an object track must exceed in order to be counted. This is described elsewhere with respect to FIG. 8. |

The following parameters may also exist for each passing zone node 342. Each of these parameters are also described in further detail below with respect to FIG. 9.

Previous Threshold:
Count Threshold:
Percent Difference Threshold:
Background Image:

After initialization in step 201, the video streams are configured in step 202. In order to optimize system resources, CPU 130 and memory 135, it is only necessary to capture and store the portion of the image that will be analyzed by the processing system 130. Again, one or more looking zones 420 (as defined in node 341) and passing zones 430 (as defined in node 342) are defined for the promotional display, etc. 410 being monitored. In one embodiment, these zones 420, 430 are the only portion of the image that are analyzed by the present invention. The largest window 440 that encloses all looking zones 420 and passing zones 430 is called the region of interest (ROI). In this embodiment, when the present invention is operating, only the ROI 440 need be captured and stored in memory 135. Since the present invention may support multiple cameras, each video input stream 115 may be configured independently, based on the ROI 440 for each camera 110 view.

At step 203 (FIG. 2), the present invention begins to process the video input streams 115. The processing system 130 processes each video stream 115 sequentially -- for each video input 115, the system 130 obtains the next frame (digital image) (steps 204-209). The system 130 sequentially analyzes each display 410 that is configured within the camera 110 view -- for each display 410, the system 130 analyzes the set of looking zones 420 and passing zones 430 associated with the display 410, as described in further detail below.

Looking Zone Processing

In step 207, the looking zones 420 are processed. Below is the pseudo code for the looking zone process which is performed by the processing system 130 using the video image stored in memory 135. Reference is made in [brackets] in the pseudo-code to the steps of FIG. 5.

```
[501] For ( i = 0; i < number of looking zones; i++ )
        [502] extract the region of interest for zone i
        [503] generate the background image difference
        [504] if (pixels on > percentOccupied)
                [505] status[i] = OCCUPIED
        [506] else
```

[507] status[i] = NOT_OCCUPIED
[508] end if
[509] update current background
[510] end for
[511] if ( displayStatus = NOT_OCCUPIED && getStatus() = OCCUPIED)
[512] startTime = current time
[513] displayStatus = OCCUPIED
[514] else if ( displayStatus = OCCUPIED && getStatus() = NOT_OCCUPIED)
[515] if ( (current time - startTime) > lookingTime )
[516] save looking event
[517] end if
[518] displayStatus = NOT_OCCUPIED
[519] end if

Again, each display 410 being monitored has one or more looking zones 420 associated with the display 410. If a person is detected in any one of the looking zones 420, the display 410 is considered occupied or in use. Initially, the status of each looking zone 420 (as defined in the data structure of FIG. 3), status[i], and the displays are set to NOT_OCCUPIED.

For each video signal input 115, the following is performed. In steps 501-510, the processing system 130 sequentially processes each looking zone 420 (utilizing the data structure of FIG. 3), performing the following functions. First, in step 502, the region of interest (ROI) 420 is extracted from the input frame 440 for the corresponding looking zone 420. Again, the input frame 440 corresponds to a bounding box that encloses the one or more looking zones 420 or passing zones 430. The output of the operation is a smaller frame that contains only the region of the image that corresponds to the looking zone 420 being analyzed.

Next, in step 503, an image difference is generated using the extracted frame and the current background associated with the looking zone 420. The image difference is used to detect objects in the looking zone 420 that are not in the background. Since new objects in the scene generally exhibit a different set of gray scale intensities or colors (depending upon whether gray scaling or color is used) than the background, new objects in the scene can be detected. The following equation may be used in generating the image difference for a looking zone 420 of width n and height m:

$$\sum_{x=0}^{n} \sum_{y=0}^{m} D(x,y) = f(I(x,y), B(x,y))$$

where

$$f(i,b) \quad = 1, \text{ if } |i\text{-}b| \geq D$$

$$=0, \text{ if } |i\text{-}b| < D$$

and where D is the difference threshold.

Pixels in the image difference with a value of 1 represent locations within the image where objects have been detected. The threshold value selected for the image difference operation must be large enough to eliminate noise resulting from shadows, changing lighting conditions, and other environmental factors. However, the threshold must be small enough to detect the presence of people within the scene.

To determine if the looking zone 420 is occupied, in steps 504-508 the processing system 130 compares the total number pixels in the image difference with a value of 1 to the percent_occupied parameter. The percent_occupied parameter is the total number of pixels that must be different between the current frame and background frame for the looking zone to be considered occupied. The status of the looking zone 420 is updated, and finally, the current looking zone background is updated in step 509, as explained in further detail below.

After each looking zone is processed, the system checks for a change in the status of the display in steps 511-519. In step 511, if any looking zone is occupied and the status of the display was NOT_OCCUPIED, a person has entered one of the looking zone. In steps 512 and 513, the status of the display is set to OCCUPIED, and the time at which the display became occupied is stored in startTime.

In step 514. if the display is not occupied, the system must determine if a person has left the display. If the display status is OCCUPIED and the status of each zone is NOT_OCCUPIED, a person left the display. In steps 515-518, if the person remained at the display for greater than lookingTime seconds, the system logs a looking event. If the person was only present for a short time period, the event is not logged.

Passing Zone Processing

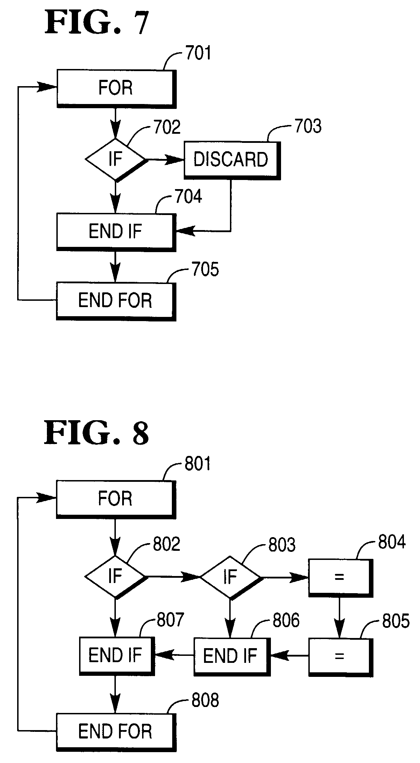

In step 208, the passing zones 430 are processed. Below is the pseudo code for the passing zone process which is performed by the processing system 130 using the video image stored in memory 135. Reference is made in [brackets] in the pseudo-code to the steps of FIG. 6.

[601] For ( i = 0; i < number of passing zones; i++ )
    [602] extract the region of interest for passing zone i
    [603] generate the background image difference
    [604] perform region labeling
    [605] filter objects
    [606] track objects
    [607] update passing count
    [608] update current background
[609] end for

Each display 410 being monitored has one or more passing zones 430 associated with the display 410. If a person is detected as walking through one of the passing zones 430, the passing count for the display 410 is updated.

For each frame input 115, the following is performed. In steps 601-609, the processing system 130 sequentially processes each passing zone 430 performing the following functions. First, in step 602, the region of interest 430 is extracted from the input frame 440 for the corresponding passing zone 430. Again, the input frame 440 corresponds to a bounding box that encloses the one or more passing zones 430 and looking zones 420. The output of the operation is a smaller frame that contains only the region of the image that corresponds to the passing zone 430 being analyzed.

Next, in step 603 an image difference is generated using the extracted frame and the current background associated with the passing zone 430. The image difference is used to detect objects in the passing zone 430 that are not in the background. Since new objects in the scene generally exhibit a different set of gray scale intensities than the background, new objects in the scene can be detected. The same method is used as in looking zone background differencing, previously described with respect to FIG. 5.

At this point, a binary image exists in memory 135 with values of 0 and 1. A pixel value of 1 indicates the presence of an object that is different than the background. Next, in step 604 a region labeling operation is performed on the image difference in order to group adjacent pixels that are "On" in the image difference. For example, assume a portion of the binary image contains the following pixel values (as shown in TABLE 2).

| 0 | 1 | 1 | 0 | 0 | 0 | 1 | 1 | 1 | 1 |
| 1 | 1 | 1 | 1 | 0 | 0 | 0 | 1 | 1 | 0 |
| 0 | 1 | 1 | 1 | 1 | 0 | 0 | 1 | 1 | 1 |
| 0 | 1 | 1 | 1 | 1 | 1 | 0 | 1 | 1 | 1 |
| 0 | 1 | 1 | 1 | 1 | 1 | 0 | 1 | 1 | 1 |
| 0 | 0 | 1 | 1 | 0 | 1 | 0 | 1 | 1 | 1 |
| 0 | 0 | 0 | 0 | 0 | 0 | 0 | 1 | 1 | 1 |
| 0 | 0 | 0 | 0 | 0 | 0 | 0 | 0 | 1 | 1 |
| 0 | 0 | 0 | 0 | 0 | 0 | 0 | 0 | 0 | 0 |
| 0 | 0 | 0 | 0 | 0 | 0 | 0 | 0 | 0 | 0 |

## TABLE 2

The region labeling of step 604 may identify two regions of adjacent pixels, A and B. These regions are shown below (TABLE 3):

| 0 | A | A | 0 | 0 | 0 | B | B | B | B |
|---|---|---|---|---|---|---|---|---|---|
| A | A | A | A | 0 | 0 | 0 | B | B | 0 |
| 0 | A | A | A | A | 0 | 0 | B | B | B |
| 0 | A | A | A | A | A | 0 | B | B | B |
| 0 | A | A | A | A | A | 0 | B | B | B |
| 0 | 0 | A | A | 0 | A | 0 | B | B | B |
| 0 | 0 | 0 | 0 | 0 | 0 | 0 | B | B | B |
| 0 | 0 | 0 | 0 | 0 | 0 | 0 | 0 | B | B |
| 0 | 0 | 0 | 0 | 0 | 0 | 0 | 0 | 0 | 0 |
| 0 | 0 | 0 | 0 | 0 | 0 | 0 | 0 | 0 | 0 |

## TABLE 3

Regions A and B correspond to two objects that have been identified in the passing zone 430. Since noise and poor segmentation of an object with similar gray level intensity to the background can result in less than optimal segmentation, it is necessary to relax the adjacency constraint. Adjacency can be defined as a distance function, adjacencyDistance, being expressed in terms of pixel distance. The set of pixels adjacent to pixel $P_{i,j}$ with a distance D are given below.

$$\sum_{k=-D}^{D}\sum_{l=-D}^{D} P_{i+k,\,j+l}$$

In the preferred embodiment, distance is a system parameter. In the example above, with a distance of 2, regions A and B would be grouped as a single object.

The output of the region labeling algorithm is a set of object descriptors, one for each object or region identified in the image. Each object descriptor consists of the object centroid, the x.y coordinate for the center of the object, and the size of the object in pixels. It is also possible to extract other object features, such as gray scale intensity, color features, etc., in order to improve the performance of the object matching algorithm described later.

In step 605, after objects have been identified in the current image, a filtering operation is performed. Objects that are too small should be discarded, since these likely correspond to objects resulting from noise or other segmentation related problems. The filtering causes objects that are to small to be a person (e.g., smaller than minObjectSize) to be discarded. Object filtering is described by the pseudo-code below, with reference to FIG. 7.

```
[701] for each object
        [702] if ( object size < minObjectSize)
                [703] discard object
        [704] end if
[705] end for
```

At this point, the processing system 130 has a set of objects that should correspond to people within the scene. In step 606, the system 130 now must match objects in the current frame with objects in the previous frame. TrackObjects is an array of objects that are currently being tracked. An entry in the TrackObjects array may consist of

- the associated object descriptor from the previous frame, and
- initial object location when first identified

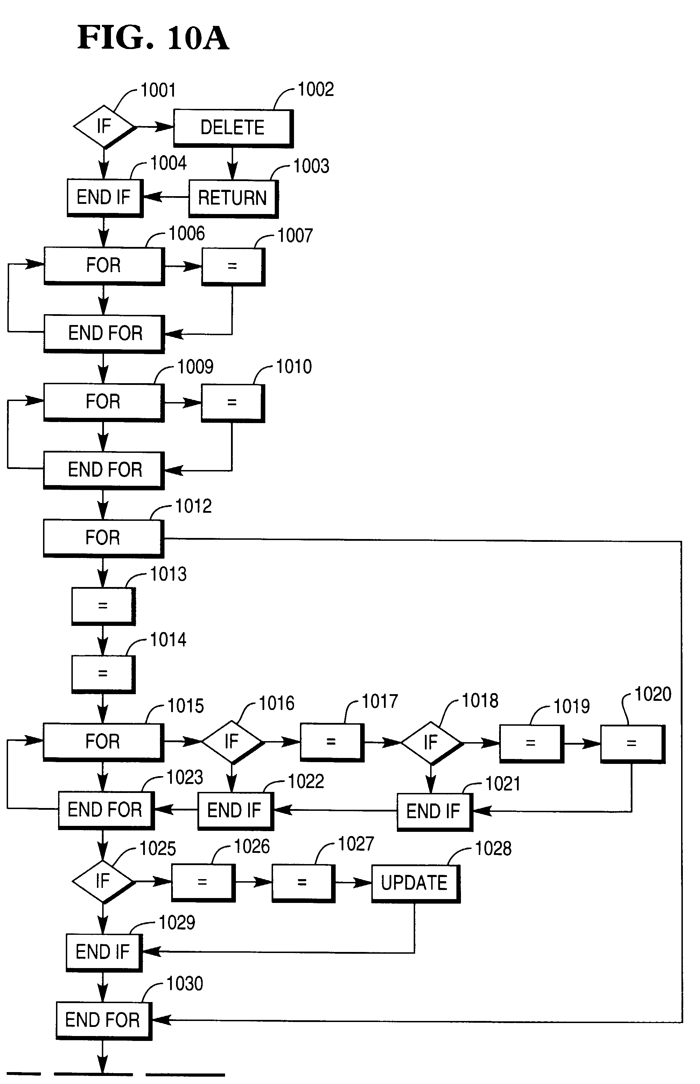

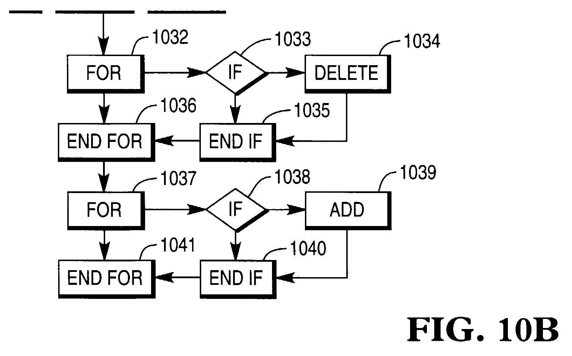

NewObjects is an array of object descriptors for the current frame. The sub-steps performed within step 606 to perform object matching are described as pseudo-code below, with reference to FIG. 10.

```
[1001] if ( number of NewObjects = 0 )
        [1002] delete all TrackObjects
        [1003] return
```

```
[1004] end if
[1006] for ( k = 0; k < number of TrackObjects; k++ )
        [1007] trackStatus[k] = NOT_MATCHED
[1009] for ( k = 0; k < number of NewObjects; k++ )
        [1010] objectStatus[k] = NOT_MATCHED
[1012] for ( k = 0; k < number of TrackObjects; k++ )
        [1013] bestD = MAXIMUM
        [1014] index = -1
        [1015] for ( j = 0; j < number of NewObjects; j++ )
                [1016] if (objectStatus[j] = NOT_MATCHED )
                        [1017] d = distance(TrackObjects[k], NewObjects[j])
                        [1018] if ( d < maxDistance AND d < bestD )
                                [1019] bestD = d
                                [1020] index = j
                        [1021] end if
                [1022] end if
        [1023] end for
        [1025] if ( index != -1 )
                [1026] objectStatus[index] = MATCHED
                [1027] trackStatus[k] = MATCHED
                [1028] update TrackObjects[k] with NewObjects[index]
        [1029] end if
[1030] end for
[1032] for (k = 0; k < number of TrackObjects; k++ )
        [1033] if ( trackStatus[k] = NOT_MATCHED )
                [1034] delete trackObjects[k]
        [1035] end if
[1036] end for
[1037] for (k = 0; k < number of NewObjects; k++ )
        [1038] if ( objectStatus[k] = NOT_MATCHED )
                [1039] add newObjects[k] to trackObjects
        [1040] end if
[1041] end for
```

The following is a description of the above pseudo code with respect to FIG. 10.

In step 1001, if the system did not identify any objects in the current frame, then all of the current TrackObjects are deleted in step 1002, and the routine is exited. Beginning at step 1006, if new objects were identified, the status of each new object and each existing track is set to NOT_MATCHED in steps 1007 and 1010 respectively. The system now searches through the list of current objectTracks attempting to find the best matching object identified in the current input frame.

The matching criteria used is the location of object centroids from the previous frame and current frame. The list of TrackObjects is traversed in step 1012. For each TrackObjects, the best matching NewObjects is located. In step 1013 the distance score, bestD, is set to the maximum value. The index of the best matching object is set to -1 in step 1014. In step 1015, the NewObjects list is traversed. Beginning at step 1016, for each entry in NewObjects that has not already been matched to a TrackObjects entry, the system calculates the distance score, d, in step 1017. In steps 1018-1023, if d is less than the distance threshold, maxDistance, and less than the current bestD, a match is found. The index of the NewObjects object is saved and the bestD is updated. The distance() function calculates the pixel distance from the centroid of the TrackObjects entry and the NewObjects entry.

Beginning at step 1025, if a matching object has been found, then the corresponding TrackObjects is updated with the current object descriptor information in steps 1026-1030. At step 1032, for each TrackObjects not matched, the object is deleted in steps 1033-1036. At step 1037, for each NewObjects not matched, a new TrackObjects is created in steps 1038-1041.

The process described above with respect to FIG. 10 is a preferred embodiment. However, improvements in this process may be made, as described below.

In the description above, the distance function (step 1017) may be calculated by determining the distance from the centroid of each object. The notion of distance can be extended to include features other than object location. For example, other object features that can be exploited to increase accuracy are object size, gray scale intensity of an object, or color of an object. The distance function can be written as a weighted equation, as shown below

$$d = w1 * (\text{location distance}) + w2 * (\text{size distance}) + w3 * (\text{intensity distance}) + wN * (\text{feature N})$$

One approach being used for calculating the intensity distance is to extract a N x M region from around the centroid of the object. This data is then stored as a data element in the object descriptor. The distance score for intensity is then calculated by performing a normalized cross correlation function on the TrackObjects region and the NewObjects region. This approach can be extend to include any object feature type that may be useful in object matching.

A second approach is to extend the process of FIG. 10 to identify the best match for each TrackObjects and NewObjects object pairing. Steps 1012 - 1025 locate the best matching NewObjects object to the TrackObjects objects in sequential order. A drawback to this approach is that if NewObjects entry X is the best match for TrackObjects N and N+1, the object is always matched with TrackObjects N. If the distance score for TrackObjects N+1 is better, then entry X should be matched to TrackObjects N+1. This anomaly in matching may also result in the system discarding or creating a new TrackObjects entry for the object that should have been match with TrackObjects N. This approach would increase algorithm accuracy, but would increase the computational cost in calculating distance.

Referring to FIG. 8, after the object tracks have been updated, the system must determine if an object has passed through the passing zone 430. This is done by analyzing the length of the object track. For each object track, line 801, the system determines if the object has already been counted, line 802. If the object has not been counted, the system compares the object track length to the pathLengthThreshold. If the path length exceeds the threshold, line 803, the passing count is updated in 804. The count flag for the object is set to true, line 805, so that the object will not be counted twice. The pseudo-code for FIG. 8 appears below.

```
[801] for (j = 1; j < number of track objects; j++ )
    [802] if ( TrackObjects[j].count = FALSE )
        [803] if ( pathLength(TrackObjects[j]) > pathLength Threshold )
            [804] passingCount = passingCount + 1
            [805] TrackObjects[j].count = TRUE
        [806] end if
    [807] end if
[808] end for
```

After steps 801-808 are completed, the background may be updated using the same method previously described for the looking zone 420 with respect to FIG. 5.

Output

In one embodiment, the output of the analysis system of the present invention may be an event stream that describes the interaction of people with a display 410. The present invention may be implemented to measure the following information:

- the number of people passing a display
- the number of people interacting with (looking at) a display
- the amount of time each person interacts with (looks at) the display

This information may be stored in a binary file called an event file, on hard disk or other storage media. Event files are files created on each processing system 130 that is performing display analysis. The display analysis system stores two types of events, or records, in event files. The two types of events are looking events (corresponding to the looking zone 420) and passing events (corresponding to the passing zone 430).

When the processing system 130 detects a person in the looking zone 420 (as described previously), a new looking event is generated. The following table (TABLE 4) describes the data format of a customer looking event, in one embodiment:

TABLE 4

| Field | Function |
| --- | --- |
| zone identifier | identifies the display |
| looking | identifies the amount of time the person interacted with the display. |
| Timestamp | indicates the time of event creation |

Each time the processing system 130 detects that a person has passed through passing zone 430, a new passing event is generated. In one embodiment, two or more customers passing the display at the same time are recorded in the same event. The following table (TABLE 5) describes the data format of a passing event:

TABLE 5

| Field | Function |
|---|---|
| zone identifier | identifies the display |
| count | number of persons to pass |
| Timestamp | indicates the time of event creation |

Background Adaptation

Over time, the scene that is being viewed by a camera 110 can change. These changes may result from changes in lighting conditions, i.e. night and day, or changes in the physical location of objects within the camera 110 view. In order to detect people accurately within a camera 110 view, the present invention must be capable of adapting the current background to incorporate changes in the scene. Furthermore, since looking zones 420 and passing zones 430 can be located at different locations within the image, individual backgrounds may be maintained for each zone. The size of the background may be equal to the size of the zone.

In a preferred embodiment, the method used to update looking zones 420 and passing zones 430 backgrounds is the same. A separate background is maintained for each looking and passing zone defined within the view of an individual camera 110. At initialization time, each looking and passing zone for an individual display may be initialized by loading a background image file.

The process described by the following pseudo-code may be performed by processing system 130 in updating the background, with reference to FIG. 9.

```
[901] // Initialization
[902] backgroundFrame = background frame
[903] frameCount = 0
[904] previousFrame = current frame
[905] previousCount = 0
[906] // End initialization
[907] for (;;)
        [908] get next frame
        [909] create_image_difference(current frame, previousFrame)
        [910] if ( percentage different > Percentdifference Threshold )
                [911] previousFrameCount = 0
                [912] previousFrame = current frame
                [913] frameCount = 0
        [914] else
                [915] previousFrameCount = previousFrameCount + 1
                [916] if ( previousFrameCount > previousThreshold )
                        [917] previousFrameCount = 0
                        [918] previousFrame = current frame
                [919] end if
                [920] frameCount = frameCount + 1
                [921] if ( frameCount > countThreshold )
                        [922] frameCount = 0
                        [923] backgroundFrame = current frame
                [924] end if
        [925] end if
    [926] end for
```

The basic concept behind the process described above and in FIG. 9 is to identify a consecutive sequence of input frames 115 that demonstrate very little change in content. If there is little or no change in the scene, the background image can be updated. In the approach described, change in content is identified by motion. If people are within the scene, their movement will cause the system 130 to not capture a new background.

Beginning with step 901, the background is initialized to the background frame stored on disk, or other storage media (step 902). In step 903, FrameCount, which is the total number of images that have been processed meeting the motion constraint, is initialized to zero. In steps 904 and 905, PreviousFrame and PreviousFrameCount are used to increase system sensitivity to motion and change. PreviousFrame is set to the initial input frame and PreviousFrame-Count is initialized to 0.

The following two variables, countThreshold and previousThreshold, are parameters that control how quickly the system will acquire a new background. CountThreshold is the number of consecutive frames meeting the motion constraint that must be processed before a new background will be acquired. A larger value for CountThreshold decreases the frequency in which new backgrounds are acquired, i.e. increases the length of time the motion constraint must be met.

PreviousThreshold determines at what frequency the system acquires a new PreviousFrame. A new previous-Frame is acquired whenever the motion constraint is not met or after every Previousthreshold frames has been processed. Since the motion constraint is evaluated by calculating the image difference of the previousFrame and current-Frame, previousThreshold can be used to configure the sensitivity of the system to motion. In some situations, the movement of people may be imperceptible between consecutive frames, i.e. very slow movement. However, when considered across a series of frames, motion can be easily identified.

After the system is initialized, each input frame is processed beginning at steps 907 and 908. The frame at this point in time corresponds to one of the passing zones or looking zones within the region of interest 440. In step 909, an image difference is generated between the current frame and the previous frame. The difference threshold used in generating the image difference corresponds to the zone threshold for the looking zone or passing zone. In step 910, if the percentage of pixels that are different exceeds the percent different threshold, the motion constraint has failed and the algorithm variables are reset (steps 911-913). In step 914, if the percentage of pixels that are different is less than the percent different threshold, the motion constraint has been met, and processing continues at step 915.

First, the previous count is updated in step 915. In step 916, if previousCount is greater than the previousThreshold, previousFrameCount is reset and previousFrame is set equal to the current frame in steps 917 and 918. Next, the frameCount is updated in step 920. In step 921, if frameCount is greater than the countThreshold, the motion constraint has been met for the required number of frames. In steps 922 and 923, frameCount is reset and the backgroundFrame is set equal to the current frame.

Segmentation Improvements

As previously described, the difference threshold used in creating an image difference is a single integer number. However, this approach can have drawbacks. First, during configuration the user must configure the best threshold for the zone. This results in a configure, test, evaluate performance scenario, where the user must perform empirical testing to identify the best threshold. This is not the most desirable approach. Second, due to variations in lighting and background characteristics, it may be difficult to identify a single threshold that works well over the entire looking zone 430 or passing zone 420. For example, background differencing in scenes with bright, reflective floors generally require a larger difference threshold than a dark scene, due to the impact of shadows.

One approach that may be implemented is to have a different threshold for each pixel in the image. With this approach, when image differencing is performed, the best threshold is used for each pixel in the zone. This is shown in the image difference equation shown below for a zone of size n by m.

$$\sum_{x=0}^{n}\sum_{y=0}^{m} D(x,y) = f(I(x,y), B(x,y))$$

where

$$f(i,b) = 0, \text{ if } |i\text{-}b| < G(x,y)$$
$$= 1, \text{ if } |i\text{-}b| \geq G(x,y)$$

G(x,y) is a two dimensional array that contains the threshold to be used for each pixel in the looking or passing zone.

The thresholds contained in G(x,y) may be automatically calculated by the processing system 130 when a new background for the corresponding zone is captured. The following equation may be used for generating the threshold for each x,y location

$$G(x,y) = -0.00000000000600 * k^6 + 0.00000000412652 * k^5 +$$

$$-0.00000097234900 * k^4 + 0.00008142579606 * k^3 +$$

$$9.99999999999988$$

where k = B(x,y), the intensity value of pixel x,y in the current background image. G(x,y) is updated each time a new background image is acquired. The equation shown above has been derived by analyzing the amount of noise generated at various pixel intensities. In general, it has been found that higher intensity values are impacted more by noise, shadowing, and other environmental factors that create error. The equation above creates a larger threshold value for higher intensity pixel value locations in the scene.

A second enhancement that can be used is to perform a noise elimination step on the image difference. This approach involves performing a series of morphological operations on the image difference. By performing a morphological erosion and dilation operation, noisy regions in the image difference can be reduced or eliminated. At the same time, areas containing objects that are fuzzy due to poor segmentation will be filled in.

Configuration Tool for Looking Zone and Passing Zone

In order to configure one or more looking zones 420 and one or more passing zones 430, a configuration tool may be implemented, as described below. In the preferred embodiment, the configuration tool may be a Visual Basic application operating on the processing system 130, that supports a graphical user interface.

The process for configuring looking zones 420 and passing zones 430 is a follows. From the configuration tool, the user captures an image from the frame grabber card 120 that is stored in memory 135. The camera image may then be displayed on the PC display (not specifically shown, but inherent in PC 130). Looking zones 420 and passing zones 430 may be created by using a mouse input device, or any other suitable input device of PC 130. For example, to create a display (e.g., data structure 331, etc.) for analysis, the user may select a "create a new display" option from a menu. All parameters associated with a display are now entered on a keyboard or other input device associated with the PC 130 (these parameters are described elsewhere with respect to FIG. 3).

The user may now create the looking zones 420 and passing zones 430 (e.g., data structures 341 and 342) associated with the display. A looking 420 zone may be created by selecting a "create a new looking zone" option (or other suitable option) from the menu. By "dragging" and "clicking" with a mouse, etc., the user may "draw" the location of the looking zone 420 on the image being displayed on the PC display 130. The bounding box coordinates are generated from the zone size and location on the display. After the zone is located and sized, the user may "double click" on the zone and enter via the keyboard all parameters associated with the looking zone (described previously with respect to FIG. 3). An analogous process is followed when creating a passing zone 430.

After all zones are created and configured, the parameters may then be saved to a storage device 150 (e.g., hard disk drive, etc.) as a parameter file that is loaded by the present invention at initialization time. This configuration process may be followed for each display 331 to be monitored.

## Claims

1. A process for analyzing movement patterns in a localized area, characterizing the steps of:

   positioning a video camera (110) so as to view the localized area;
   capturing sequential images from the video camera at selected intervals in time;
   storing the sequential images in a memory (135);
   detecting whether a person exists within the stored sequential images;
   sensing the time that any detected person exists in the stored images; and
   generating an event once the sensed time reaches a predetermined threshold.

2. A process according to claim 1 comprising the steps of:

   dividing each stored sequential image into a looking zone and a passing zone;
   detecting whether a person exists within looking zone;
   sensing the time that any detected person exists in the looking zone;
   generating a looking event once the second time reaches a predetermined threshold;

detecting whether a person has passed through the passing zone; and

generating a passing event if a person is detected as having passed through the passing zone.

3. The process of claim 3, further comprising the step of analyzing the generated looking events and passing events in order to perform statistical analysis on the movement patterns of the persons passing through the looking zone and passing zone.

4. A system for analyzing movement patterns comprising:

a video camera (110)

means (135) for storing an image from the video camera; and

processing means (140) coupled to the video camera and the storing means arranged to:

sequentially store images from the video camera in the storing means at selected intervals in time;

detect whether a person exists within the sequential images stored in the storing means;

sense the amount of time that the person is detected as existing in the sequential images stored in the storing means; and

generate an event once the sensed time reaches a predetermined threshold.

5. The system of claim 4, wherein the storing means comprises:

a frame grabber (120) for capturing an image from the video camera;

memory (135) for storing the image captured by the frame grabber;

and wherein the processing means comprises a personal computer.

EP 0 823 821 A2

# FIG. 1

# FIG. 3

# FIG. 2

```
┌──────────────┐  201
│     INIT     │
└──────────────┘
        │
        ▼
┌──────────────┐  202
│    CONFIG    │
└──────────────┘
        │
        ▼
┌──────────────┐  203
│    WHILE     │
└──────────────┘
        │
        ▼
┌──────────────┐  204
│     FOR      │
└──────────────┘
        │
        ▼
┌──────────────┐  205
│     GET      │
└──────────────┘
        │
        ▼
┌──────────────┐  206
│     FOR      │
└──────────────┘
        │
        ▼
┌──────────────┐  207
│   PROCESS    │
└──────────────┘
        │
        ▼
┌──────────────┐  208
│   PROCESS    │
└──────────────┘
        │
        ▼
┌──────────────┐  208A
│   END FOR    │
└──────────────┘
        │
        ▼
┌──────────────┐  209
│   END FOR    │
└──────────────┘
        │
        ▼
┌──────────────┐  210
│  END WHILE   │
└──────────────┘
```

# FIG. 6

```
┌──────────────┐  601
│     FOR      │
└──────────────┘
        │
        ▼
┌──────────────┐  602
│   EXTRACT    │
└──────────────┘
        │
        ▼
┌──────────────┐  603
│   GENERATE   │
└──────────────┘
        │
        ▼
┌──────────────┐  604
│   PERFORM    │
└──────────────┘
        │
        ▼
┌──────────────┐  605
│    FILTER    │
└──────────────┘
        │
        ▼
┌──────────────┐  606
│    TRACK     │
└──────────────┘
        │
        ▼
┌──────────────┐  607
│    UPDATE    │
└──────────────┘
        │
        ▼
┌──────────────┐  608
│    UPDATE    │
└──────────────┘
        │
        ▼
┌──────────────┐  609
│   END FOR    │
└──────────────┘
```

## FIG. 4A

## FIG. 4B

# FIG. 5

# FIG. 7

```
        ┌─────701
   ┌──►┌──────────┐
   │   │   FOR    │
   │   └──────────┘
   │        │    ┌─702        ┌─703
   │        ▼                 ┌──────────┐
   │    ◇ IF ◇ ──────────────►│ DISCARD  │
   │        │                 └──────────┘
   │        │     ┌─704            │
   │        ▼                      │
   │   ┌──────────┐◄───────────────┘
   │   │  END IF  │
   │   └──────────┘
   │        │    ┌─705
   │        ▼
   │   ┌──────────┐
   └───│ END FOR  │
       └──────────┘
```

# FIG. 8

```
         ┌─801
    ┌──►┌──────────┐
    │   │   FOR    │
    │   └──────────┘
    │        │  ┌─802        ┌─803        ┌─804
    │        ▼                            ┌────┐
    │     ◇ IF ◇ ─────►◇ IF ◇ ──────────►│ =  │
    │        │            │               └────┘
    │   ┌─807│        ┌─806│                 │ ┌─805
    │        ▼            ▼               ┌────┐
    │   ┌────────┐   ┌────────┐           │ =  │
    │   │ END IF │◄──│ END IF │◄──────────└────┘
    │   └────────┘   └────────┘
    │        │  ┌─808
    │        ▼
    │   ┌──────────┐
    └───│ END FOR  │
        └──────────┘
```

# FIG. 9

# FIG. 10A

FIG. 10B